# EUROPÄISCHE PATENTSCHRIFT

(11) **EP 0 999 249 B1**
(45) Veröffentlichungstag und Bekanntmachung des Hinweises auf die Patenterteilung: **15.08.2007**
(21) Anmeldenummer: 99121699.5
(22) Anmeldetag: 02.11.1999
(51) Int. Cl.: C09J 5/00, G11B 7/26

(54) **Verfahren zum Verhindern von Blasen oder Bläschen beim Verbinden von Substratteilen optischer Datenträger durch einen Kleber**
Process for avoiding the inclusion of bubbles during the joining by adhesives of optical data carrier substrates
Procédé pour éviter l'inclusion de bulles pendant la liaison par collage de substats pour supports d'information optique

(30) Priorität: 04.11.1998 DE 19850832
(43) Veröffentlichungstag der Anmeldung: 10.05.2000
(73) Patentinhaber: Singulus Technologies AG, 63755 Alzenau (DE)
(72) Erfinder: Gerigk, Reinhard, 63571 Gelnhausen (DE); Sichmann, Eggo, 63571 Gelnhausen (DE); Mücke, Michael, 61184 Karben (DE)
(74) Vertreter: Vossius & Partner

(56) Entgegenhaltungen:
- EP-A- 0 297 520
- DE-C- 19 616 331
- FR-A- 2 377 440
- FR-A- 2 414 070
- US-A- 3 206 323
- US-A- 4 024 038
- PATENT ABSTRACTS OF JAPAN vol. 1996, no. 06, 28. Juni 1996 (1996-06-28) & JP 08 036791 A (MITSUBISHI CHEM CORP), 6. Februar 1996 (1996-02-06)
- PATENT ABSTRACTS OF JAPAN vol. 015, no. 088 (P-1174), 4. März 1991 (1991-03-04) & JP 02 304747 A (DAICEL CHEM IND LTD), 18. Dezember 1990 (1990-12-18)
- PATENT ABSTRACTS OF JAPAN vol. 011, no. 259 (C-441), 21. August 1987 (1987-08-21) & JP 62 060860 A (MATSUSHITA ELECTRIC IND CO LTD), 17. März 1987 (1987-03-17)
- PATENT ABSTRACTS OF JAPAN vol. 014, no. 281 (M-0986), 18. Juni 1990 (1990-06-18) & JP 02 086559 A (TAIYO KIKAI SEISAKUSHO:KK), 27. März 1990 (1990-03-27)
- PATENT ABSTRACTS OF JAPAN vol. 1998, no. 02, 30. Januar 1998 (1998-01-30) & JP 09 282650 A (NIPPON KIYOKUMEN INSATSU KENKYUSHO:KK), 31. Oktober 1997 (1997-10-31)
- PATENT ABSTRACTS OF JAPAN vol. 1997, no. 07, 31. Juli 1997 (1997-07-31) & JP 09 063133 A (SEIKO EPSON CORP), 7. März 1997 (1997-03-07)
- PATENT ABSTRACTS OF JAPAN vol. 016, no. 481 (P-1431), 6. Oktober 1992 (1992-10-06) & JP 04 170731 A (MATSUSHITA ELECTRIC IND CO LTD), 18. Juni 1992 (1992-06-18)
- PATENT ABSTRACTS OF JAPAN vol. 011, no. 078 (M-570), 10. März 1987 (1987-03-10) & JP 61 235133 A (RICOH CO LTD), 20. Oktober 1986 (1986-10-20)
- PATENT ABSTRACTS OF JAPAN vol. 010, no. 003 (P-418), 8. Januar 1986 (1986-01-08) & JP 60 160039 A (MATSUSHITA DENKI SANGYO KK), 21. August 1985 (1985-08-21)
- PATENT ABSTRACTS OF JAPAN vol. 014, no. 538 (P-1136), 28. November 1990 (1990-11-28) & JP 02 227842 A (HITACHI LTD), 11. September 1990 (1990-09-11)

## Beschreibung

Die Erfindung betrifft ein Verfahren zum Verbinden von Substratteilen optischer Datenträger, insbesondere der zwei Hälften einer DVD (Digital Versatile Disc) durch einen Kleber.

Bei DVDs werden Informationen, die in Form von sehr kleinen Erhebungen und Vertiefungen (Pits) in der Oberfläche einer DVD-Hälfte gespeichert sind, durch die andere DVD-Hälfte sowie eine Kleberschicht zwischen den beiden Hälften hindurch ausgelesen. Aufgrund der Kleinheit der Pits können geringfügige Störungen in der Klebstoffschicht in Form von Bläschen die Wiedergabe der Informationen in den Pits beeinträchtigen. Bereits bei Auftreten eines einzigen Bläschens in der Kleberschicht ist eine DVD als fehlerhaft einzustufen. Die Bläschen können auftreten, auch wenn eine gleichmäßige Benetzung des Substratteils (DVD-Hälfte) durch den Kleber erfolgte. Die Ursache der Bläschen ist noch nicht völlig geklärt. Die Bläschen können Gaseinschlüsse aus der Umgebungsatmosphäre sein, die beim Andrücken beider Substratteile entstehen. Es besteht auch die Möglichkeit, daß sie sich im Kleber von selbst ausbilden. Eine Ursache dafür könnte ein Ausgasen von Lösungsmittel des Klebers sein. Bevorzugt wird Kleber bestimmter Viskosität in Form einer dicken umlaufenden Bahn im inneren Bereich eines Substratteils aufgebracht, beim Verbinden mit dem anderen Substratteil breitgedrückt und überschüssiger Kleber vorzugsweise durch ein schnelles Rotieren des Substratteils bzw. der DVD entfernt. Andere Verfahren zum Auftragen des Klebers sind z.B. das gleichmäßige Aufsprühen auf ein rotierendes Substratteil oder das Einspritzen in voneinander weg gewölbte Substratteile. Bei allen bekannten Verfahren können die erwähnten, für die Wiedergabe der Daten schädlichen Bläschen auftreten.

Demgegenüber liegt der Erfindung die Aufgabe zugrunde, ein Verfahren zur Verfügung zu stellen, das die erwähnten Nachteile beseitigt und Bläschen zwischen den Substratteilen optischer Datenträger nach ihrem Verbinden durch einen Kleber zuverlässig verhindert.

Die Aufgabe wird mit den Merkmalen der Patentansprüche gelöst.

Überraschenderweise wurde gefunden, daß das Auftreten von Bläschen zwischen zwei Substratteilen optischer Datenträger nach ihrem Verbinden mit einem Kleber verhindert werden kann durch Aufbringen von Ladungen auf mindestens ein Substratteil und/oder den Kleber vor oder nach dem Auftrag auf ein Substratteil.

Bei der Lösung geht die Erfindung daher von dem Grundgedanken aus, auf mindestens eines aus der Gruppe Substratteile und Kleber elektrische Ladungen aufzubringen. Das kann vor und/oder nach dem Auftragen eines Klebers und vor und/oder nach dem Zusammenfügen der beiden Substratteile geschehen. Es können auch mehr als zwei Substratteile (Hälften) zu einem Verbund optischer Datenträger zusammengeklebt werden. Dann wird das erfindungsgemäße Verfahren jeweils bei aufeinanderfolgenden Verklebungen von Substratteilen angewandt.

Die Vorteile des erfindungsgemäßen Verfahrens liegen in der Gewährleistung einer vollständigen und fehlerfreien Wiedergabe der in den Pits der DVD gespeicherten Informationen.

Aus der DE-A1-37 21 703 ist es zwar an sich bekannt, Werkstücke, z.B. Kraftfahrzeugkarossen mit elektrisch isolierender Oberfläche, vor dem Lackieren gleichmäßig elektrostatisch aufzuladen. Auf diese Weise wird ein gleichmäßiger Lackschichtauftrag auf die Oberfläche erreicht. Die bei der Herstellung optischer Speichermedien, wie DVD, auftretenden Probleme, nämlich die Ausbildung von Bläschen, die die Aufzeichnung bzw. die Datenwiedergabe beeinträchtigen, stellen sich jedoch bei diesem Stand der Technik nicht.

Im folgenden wird die Erfindung anhand der Zeichnung näher erläutert. Es zeigen:
- Fig. 1: eine Seitenansicht einer Vorrichtung, bei der das erfindungsgemäße Verfahren zur Anwendung kommt,
- Fig. 2: eine Draufsicht auf die Vorrichtung gemäß Fig. 1, und
- Fig. 3: das erfindungsgemäße Verfahren in Verbindung mit dem Verkleben zweier Substratteile.

Das erfindungsgemäße Verfahren sieht bevorzugt vor, auf mindestens ein Substratteil elektrische Ladungen aufzubringen. Das kann durch Formieren von Ladungen durch ein elektrisches Feld oder durch Besprühen des Substratteils mit Elektronen (z.B. Koronaentladung) erfolgen. Es besteht jedoch auch die Möglichkeit, eine Ladungstrennung auf dem Substratteil durch Reiben zu erreichen und somit Reibungselektrizität zu erzeugen. In Abhängigkeit von dem Substratmaterial, dem Klebermaterial, der Temperatur und/oder der Luftfeuchtigkeit kann die Oberfläche des Substratteils auf eine vorbestimmte Ladungsverteilung und eine vorbestimmte Polarität aufgeladen werden. Substratteile mit nicht leitfähiger Oberfläche werden bevorzugt positiv aufgeladen. Metallisierte Substratteile - also leitfähige Substratteile - können sowohl positiv als auch negativ aufgeladen werden. Bevorzugt wird auf eine homogene Ladungsverteilung aufgeladen. Die Ladungsverteilung kann aber auch inhomogen, z.B. radial auf dem Substratteil zunehmend oder abnehmend sein. Wichtig für ein Funktionieren des Verfahrens ist vor allem der Ladungszustand in dem Bereich des Substrats, wo der erste Kontakt mit dem Kleber beim Zusammenfügen auftritt. Eine beabsichtigte Wirkung des erfindungsgemäßen Verfahrens ist es, eine elektrostatische Abstoßung des Klebers zu verhindern. Es wurde beobachtet, daß ohne das erfindungsgemäße Verfahren eine auf ein Substratteil aufgetragene Kleberbahn beim Zusammenfügen von dem sich nähernden anderen Substratteil, möglicherweise durch elektrostatische Abstoßung, in seiner Form verändert wurde, d.h. die konvexe Form der wulstförmigen Kleberbahn erhielt eine konkave Einsattelung. Beim Zusammenfügen der Substratteile entstanden so Hohlräume, die zur schädlichen Blasenbildung im Kleber führten.

Gemäß einer vorteilhaften Weiterentwicklung des Verfahrens werden die Ladungen im Fertigungsprozeß so aufgebracht, daß sie einerseits eine ausreichende Wirkung erzielen und andererseits sich das Aufbringen der Ladungen möglichst einfach in den Prozeß einbinden läßt. So ist es z.B. auch möglich, beide Substrathälften aufzuladen. Es kann auch der Kleber an seiner Austrittsdüse geerdet oder positiv oder negativ aufgeladen werden. Auf diese Weise kann der Kleber ladungsneutral oder aufgeladen auf mindestens ein Substratteil aufgetragen werden.

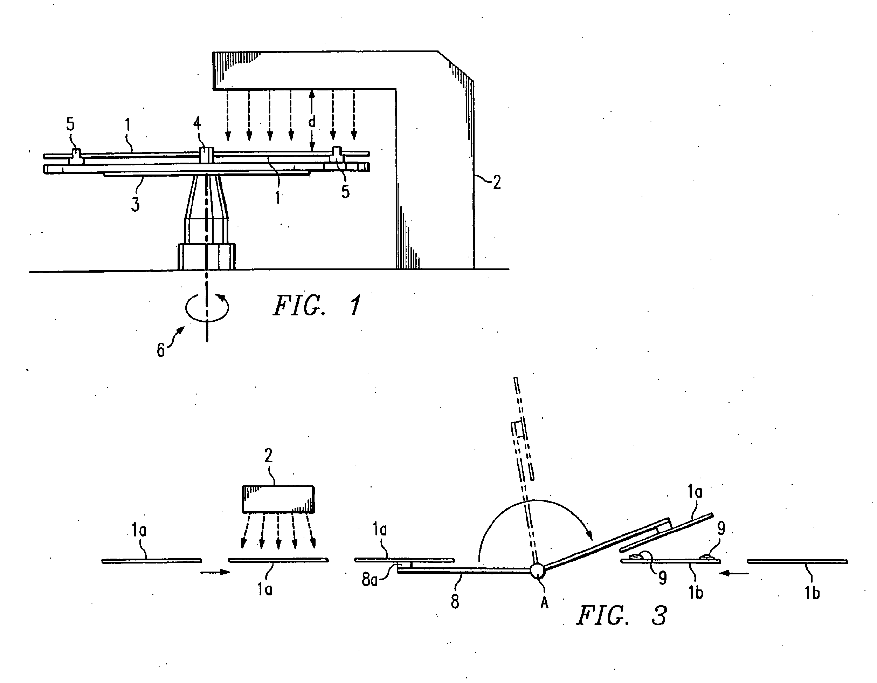

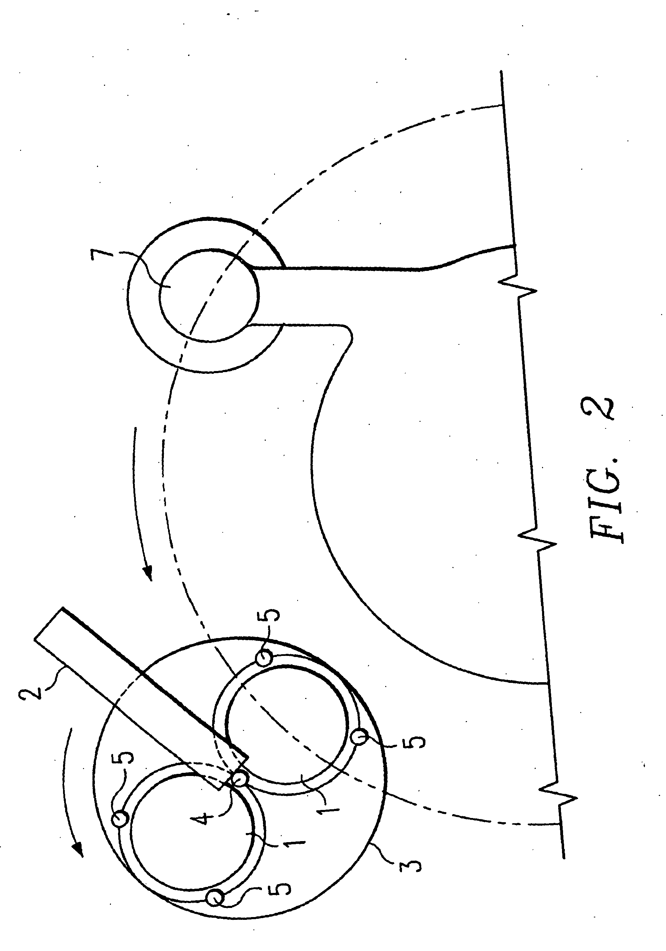

Fig. 1 zeigt eine Vorrichtung für die Anwendung des erfindungsgemäßen Verfahrens in der DVD-Fertigung. Auf einem Drehteller 3 mit einem Antrieb 6 befinden sich zwei DVD-Hälften 1, die elektrisch isoliert im Zentrum 4 des Drehtellers 3 und durch Halterungen 5 am Rande der Scheiben auf dem Drehteller befestigt sind. Es kann jedoch auch nur eine DVD-Hälfte oder, es können auch noch mehr als zwei DVD-Hälften auf dem Drehteller 3 angeordnet sein. Oberhalb der DVD-Hälften 1 ist in einem bestimmten Abstand d von z.B. 10 bis 50 mm, vorzugsweise 30 mm, ein Ladekamm 2 angeordnet. Zwischen dem Ladekamm 2 und den DVD-Hälften 1 wird ein elektrisches Feld angelegt bzw. werden Ladungen transportiert. Dadurch werden die DVD-Hälften elektrostatisch aufgeladen oder, wenn bereits Ladungen auf den Hälften vorhanden sind, diese neutralisiert. Eine Rotation des Drehtellers 3 bewirkt eine gleichmäßige Verteilung der Ladungen.

In der Draufsicht gemäß Fig. 2 ist zu erkennen, daß die auf dem Drehteller 3 gehalterten DVD-Hälften 1, die in einem Transportsystem über einen Greifer 7 zu- und abgeführt werden können, unter dem Ladekamm 2 rotieren. Es besteht jedoch die prinzipielle Möglichkeit, daß der Ladekamm 2 über die Substrate bewegt wird und die Substrate feststehen. Bevorzugt wird eine der DVD-Hälften elektrostatisch aufgeladen und auf die andere bereits mit einem Kleber benetzte DVD-Hälfte zum Verkleben abgesenkt. Es können jedoch auch auf beide DVD-Hälften vor dem Benetzen mit einem Kleber Ladungen aufgebracht werden.

Fig. 3 zeigt eine schematische Darstellung einer Fertigungsstrecke, die das erfindungsgemäße Verfahren in Verbindung mit dem Verkleben von zwei Substratteilen zeigt. Von links nach rechts werden Substratteile 1a zugeführt und mittels einer Aufladungseinrichtung 2 auf der Oberseite mit Ladungen versehen. Dabei kann die Oberseite elektrisch aufgeladen, aber auch neutralisiert werden, wenn bereits elektrische Ladungen auf der Oberfläche des Substratteils vorhanden waren. Mittels eines Schwenkarmes 8, der eine Greifeinrichtung 8a aufweist, wird das Substratteil 1a an der Unterseite gefaßt und um eine Achse A gedreht, so daß die Oberseite nach unten zeigt. Danach wird das Substratteil 1a auf ein von rechts herangeführtes und mit einem Kleber 9 bedecktes Substratteil 1b aufgesetzt. Beim Aufsetzen des Substratteils 1a auf das Substratteil 1b wird die wulstförmige Kleberbahn 9 breitgedrückt und es erfolgt eine Verbindung durch den Kleber. Fig. 3 zeigt eine Ausführungsform des erfindungsgemäßen Verfahrens, wobei nur das Substratteil 1a aufgeladen wird, das auf das mit dem Kleber bedeckte Substratteil 1b aufgesetzt wird. Es besteht jedoch auch die Möglichkeit, nur das mit dem Kleber bedeckte Substratteil 1b oder beide Substratteile 1a und 1b mit Ladungen zu versehen. Das kann vor oder nach dem Auftragen des Klebers erfolgen. Alternativ kann das Substratteil 1b nach dem Auftragen des Klebers 9 auf der Rückseite aufgeladen werden. Bei dem Aufladen des mit dem Kleber bedeckten Substratteils können Ladungen, die im Kleber selbst enthalten sind oder beim Auftragen entstehen, neutralisiert werden.

Die Dicke von Substratteilen in der DVD-Herstellung (0,6 mm) ist im Vergleich zur Reichweite elektrostatischer Kräfte klein. Daher kann man zum Aufbringen von Ladungen auch die Rückseite des Substratteils, d.h. die Oberfläche, die später nicht mit dem Kleber in Kontakt tritt, verwenden.

Weiterhin besteht die Möglichkeit, daß nur der Kleber mit elektrischen Ladungen versehen oder geerdet wird, oder daß zusätzlich Ladungen auf mindestens ein Substratteil aufgebracht werden.

Das Aufbringen von Ladungen auf das Substratteil bzw. die Substratteile kann, wie vorstehend erläutert, bei der Drehung der Substratteile relativ zur Ladeelektrode (Ladekamm), bei jeder Art von Relativbewegung, z.B. Linearbewegung oder bogenförmiger Bewegung, aber auch bei statischer Positionierung der Substratteile gegenüber der Ladeelektrode erfolgen, wobei nur sichergestellt werden muß, daß die gesamte gewünschte Fläche des Substratteils die gewünschte Ladung erhält. Gegebenenfalls müssen die Position und die Größe der Ladeelektrode auf die Größe des Substrats abgestimmt werden.

Der Vorteil des erfindungsgemäßen Verfahrens besteht darin, daß Blasen oder Bläschen, d.h. Luft/Gaseinschlüsse oder Hohlräume im Kleber zuverlässig verhindert werden können.

Das erfindungsgemäße Verfahren kann außer bei der DVD-Fertigung auch bei anderen Prozessen zum Einsatz kommen, wo Kunststoffsubstrate, d.h. Substrate, die sich leicht elektrostatisch aufladen, blasenfrei beschichtet werden sollen. So ist der Einsatz des erfindungsgemäßen Verfahrens beim Lackieren eines Substrats möglich.

## Patentansprüche

1. Verfahren zur Verhinderung von Blasen oder Bläschen beim Verbinden von Substratteilen (1; 1a,1b) optischer Datenträger, wie DVDs, durch einen Kleber (9), wobei auf das eine und/oder das andere Substratteil (1; 1a,1b) und/oder den Kleber (9) elektrische Ladungen aufgebracht werden.

2. Verfahren nach Anspruch 1, wobei auf der Oberfläche mindestens eines Substratteils (1; 1a,1b) vor oder nach dem Benetzen mit dem Kleber (9) elektrische Ladungen aufgebracht werden, die in bezug auf Ladungen des Klebers (9) eine entgegengesetzte Polarität aufweisen.

3. Verfahren nach Anspruch 1, wobei auf die Oberfläche mindestens eines Substratteils (1; 1a,1b) vor oder nach dem Benetzen mit dem Kleber (9) elektrische Ladungen aufgebracht werden, die in bezug auf Ladungen des Klebers (9) die gleiche Polarität aufweisen.

4. Verfahren nach Anspruch 1, wobei die Oberfläche mindestens eines Substratteils (1; 1a,1b) vor oder nach dem Benetzen mit dem Kleber (9) elektrisch neutral gemacht wird.

5. Verfahren nach einem der Ansprüche 1 bis 4, wobei der Kleber (9) elektrisch positiv oder negativ aufgeladen oder geerdet wird.

6. Verfahren nach einem der Ansprüche 1 bis 5, wobei die Ladungen durch Influenz mittels eines elektrischen Feldes aufgebracht werden.

7. Verfahren nach einem der Ansprüche 1 bis 5, wobei die Ladungen durch Besprühen des Substratteils (1; 1a,1b) mit Elektronen, vorzugsweise durch Koronaentladung, aufgebracht werden.

8. Verfahren nach einem der Ansprüche 1 bis 5, wobei die Ladungen mittels Ladungstrennung durch Reibung aufgebracht werden.

9. Verfahren nach einem der Ansprüche 1 bis 8, wobei die Ladungen mittels eines Ladekamms (2) aufgebracht werden.

10. Verfahren nach Anspruch 9, wobei der Ladekamm (2) in einem Abstand d, der vorzugsweise 10 bis 50 mm, besonders bevorzugt 30 mm beträgt, von dem Substratteil (1; 1a,1b) angeordnet ist.

11. Verfahren nach Anspruch 10, wobei der Ladekamm (2) und das Substratteil (1; 1a,1b) gegeneinander bewegt werden.

12. Verfahren nach Anspruch 11, wobei das Substratteil (1; 1a,1b) unter dem Ladekamm (2) rotiert und der Ladekamm (2) feststeht.

13. Verfahren nach Anspruch 11, wobei der Ladekamm (2) über dem Substratteil (1; 1a,1b) bewegt wird und das Substratteil (1; 1a, 1b) feststeht.

14. Verfahren nach einem der Ansprüche 1 bis 13, wobei die Oberfläche des Substratteils (1; 1a,1b) auf eine homogene Ladungsverteilung aufgeladen wird.

15. Verfahren nach einem der Ansprüche 1 bis 14, wobei die Oberfläche des Substratteils (1; 1a,1b) auf eine Ladungsverteilung aufgeladen wird, die abhängig ist von mindestens einem Parameter aus der Gruppe: Substratmaterial, Klebermaterial, Temperatur und Luftfeuchtigkeit.

16. Verfahren nach einem der Ansprüche 1 bis 15, wobei auf ein Substratteil (1a) vor dem Berühren eines mit dem Kleber (9) benetzten anderen Substratteils (1b) elektrische Ladungen aufgebracht werden.

17. Verfahren nach einem der Ansprüche 1 bis 15, wobei auf beide Substratteile (1; 1a,1b) vor oder nach dem Benetzen mit dem Kleber (9) elektrische Ladungen aufgebracht werden.

18. Verfahren nach einem der Ansprüche 1 bis 17, wobei die Ladungen auf die dem Kleber (9) zugewandte Oberfläche des Substratteils (1; 1a,1b) aufgebracht werden.

19. Verfahren nach einem der Ansprüche 1 bis 17, wobei die Ladungen auf der dem Kleber (9) abgewandten Oberfläche des Substratteils (1; 1a,1b) aufgebracht werden.

20. Verfahren nach Anspruch 19, wobei die Ladungen vor oder nach dem Auftragen des Klebers (9) aufgebracht werden.

21. Verfahren nach einem der Ansprüche 9 bis 12 und 14 bis 20, wobei mindestens ein Substratteil (1; 1a,1b) auf einem Drehteller (3) gegenüber dem Ladekamm (2) rotiert.

22. Verfahren nach einem der Ansprüche 5 bis 21, wobei die Erdung oder Aufladung des Klebers (9) an seiner Austrittsdüse erfolgt.

23. Verfahren nach einem der Ansprüche 1 bis 22, wobei die Substratteile (1; 1a,1b) Hälften einer DVD sind.

24. Anwendung des Verfahrens nach einem der Ansprüche 1 bis 23, wobei mehr als zwei Substratteile (1; 1a,1b) miteinander verbunden werden.

## Claims

1. A method of preventing bubbles or small bubbles when connecting substrate parts (1; 1 a, 1b) of optical data carriers, such as DVDs, by means of an adhesive (9), wherein electric charges are applied to the one and/or the other substrate part (1; 1 a, 1 b) and/or the adhesive (9).

2. The method according to claim 1, wherein electric charges are applied to the surface of at least one substrate part (1; 1a, 1 b) before or after the application of the adhesive (9), wherein said electric charges have a polarity opposite to that of the charges of the adhesive (9).

3. The method according to claim 1, wherein electric charges are applied to the surface of at least one substrate part (1; 1 a, 1 b) before or after the application of the adhesive (9), wherein said electric charges have the same polarity as the charges of the adhesive (9).

4. The method according to claim 1, wherein the surface of at least one substrate part (1; 1a, 1 b) is rendered electrically neutral before or after the application of the adhesive (9).

5. The method according to any one of claims 1 to 4, wherein the adhesive (9) is positively or negatively electrically charged or grounded.

6. The method according to any one of claims 1 to 5, wherein the charges are applied by electrostatic induction by means of an electric field.

7. The method according to any one of claims 1 to 5, wherein the charges are applied by means of spraying electrons onto the substrate part (1; 1 a, 1b), preferably by means of corona discharge.

8. The method according to any one of claims 1 to 5, wherein the charges are applied by charge separation by means of friction.

9. The method according to any one of claims 1 to 8, wherein the charges are applied by means of a charging means (2).

10. The method according to claim 9, wherein the charging means (2) is arranged at a distance d from the substrate part (1; 1 a, 1 b), said distance d preferably being 10 to 50 mm, particularly preferably being 30 mm.

11. The method according to claim 10, wherein the charging means (2) and the substrate part (1; 1 a, 1 b) are moved relative to each other.

12. The method according to claim 11, wherein the substrate part (1; 1 a, 1 b) rotates below the charging means (2) and the charging means (2) is stationary.

13. The method according to claim 11, wherein the charging means (2) is moved over the substrate part (1; 1 a, 1b) and the substrate part (1; 1 a, 1b) is stationary.

14. The method according to any one of claims 1 to 13, wherein the surface of the substrate part (1; 1 a, 1 b) is charged so as to achieve a homogeneous charge distribution.

15. The method according to any one of claims 1 to 14, wherein the surface of the substrate part (1; 1 a, 1b) is charged so as to achieve a charge distribution depending on the substrate material and/or the adhesive material and/or the temperature and/or the atmospheric humidity.

16. The method according to any one of claims 1 to 15, wherein electric charges are applied to one substrate part (1 a) before it is contacted with the other substrate part (1 b) coated with the adhesive (9).

17. The method according to claims 1 to 15, wherein electric charges are applied to both substrate parts (1; 1 a, 1b) before or after they are coated with the adhesive (9).

18. The method according to any one of claims 1 to 17, wherein the charges are applied to that surface of the substrate part (1; 1 a, 1b) which faces the adhesive (9).

19. The method according to any one of claims 1 to 17, wherein the charges are applied to that surface of the substrate part (1; 1 a, 1b) facing away from the adhesive (9).

20. The method according to claim 19, wherein the charges are applied before or after the application of the adhesive (9).

21. The method according to any one of claims 9 to 12 and 14 to 20, wherein at least one substrate part (1; 1 a, 1 b) rotates on a rotary table (3) relative to the charging means (2).

22. The method according to any one of claims 5 to 21, wherein the adhesive (9) is grounded or charged at its outlet nozzle.

23. The method according to any one of claims 1 to 22, wherein the substrate parts (1; 1a, 1 b) are halves of a DVD.

24. Use of the method according to any one of claims 1 to 23, wherein more than two substrate parts (1; 1a, 1 b) are connected with each other.

## Revendications

1. Procédé destiné à éviter l'inclusion de bulles ru de petites bulles lors de l'assemblage d'éléments de substrats (1 ; 1a, 1b) pour des supports d'information optique, tels que des DVD, au moyen d'un adhésif (9), des charges électriques étant appliquées sur l'un et/ou sur l'autre substrat (1 ; 1a, 1b) et/ou sur l'adhésif (9).

2. Procédé selon la revendication 1, des charges électriques, qui présentent une polarité opposée par rapport à des charges de l'adhésif (9) étant appliquées sur la surface d'au moins un élément de substrat (1 ; 1a, 1b), avant ou après l'imprégnation avec l'adhésif (9).

3. Procédé selon la revendication 1, des charges électriques, qui présentent la même polarité par rapport à des charges de l'adhésif (9) étant appliquées sur la surface d'au moins un élément de substrat (1 ; 1a, 1b) avant ou après l'imprégnation avec l'adhésif (9).

4. Procédé selon la revendication 1, la surface d'au moins un élément de substrat (1 ; 1a, 1b) étant électriquement neutralisée, avant ou après l'imprégnation avec l'adhésif (9).

5. Procédé selon l'une quelconque des revendications 1 à 4, l'adhésif (9) étant chargé positivement ou négativement en électricité ou mis à la terre.

6. Procédé selon l'une quelconque des revendications 1 à 5, les charges étant appliquées par influence, au moyen d'un champ électrique.

7. Procédé selon l'une quelconque des revendications 1 à 5, les charges étant appliquées par vaporisation de l'élément de substrat (1 ; 1a, 1b) avec des électrons, de préférence par décharge par effet corona.

8. Procédé selon l'une quelconque des revendications 1 à 5, les charges étant appliquées au moyen d'une séparation des charges par frottement.

9. Procédé selon l'une quelconque des revendications 1 à 8, les charges étant appliquées au moyen d'un peigne de charge (2).

10. Procédé selon la revendication 9, le peigne de charge (2) étant placé à une distance d, de préférence de 10 à 50 mm, de façon particulièrement préférée de 30 mm de l'élément de substrat (1 ; 1a, 1b).

11. Procédé selon la revendication 10, le peigne de charge (2) et l'élément de substrat (1 ; 1a, 1b) étant déplacés l'un vers l'autre.

12. Procédé selon la revendication 11, l'élément de substrat (1 ; 1a, 1b) étant en rotation sous le peigne de charge (2) et le peigne de charge (2) étant fixe.

13. Procédé selon la revendication 11, le peigne de charge (2) étant déplacé au-dessus de l'élément de substrat (1 ; 1a, 1b) et l'élément de substrat (1; 1a, 1b) étant fixe.

14. Procédé selon l'une quelconque des revendications 1 à 13, la surface de l'élément de substrat (1 ; 1a, 1b) étant chargée à une distribution de charge homogène.

15. Procédé selon l'une quelconque des revendications 1 à 14, la surface de l'élément de substrat (1 ; 1a, 1b) étant chargée à une distribution de charge, qui est dépendante d'au moins un paramètre du groupe: matière du substrat, matière de l'adhésif, température et humidité de l'air.

16. Procédé selon l'une quelconque des revendications 1 à 15, des charges électriques étant appliquées sur un élément de substrat (1a), avant le contact avec un autre élément de substrat (1b) imprégné de l'adhésif (9).

17. Procédé selon l'une quelconque des revendications 1 à 15, des charges électriques étant appliquées sur les deux éléments de substrat (1; 1a, 1b), avant ou après l'imprégnation avec l'adhésif (9).

18. Procédé selon l'une quelconque des revendications 1 à 17, les charges étant appliquées sur la surface de l'élément de substrat (1; 1a, 1b) qui fait face à l'adhésif (9).

19. Procédé selon l'une quelconque des revendications 1 à 17, les charges étant appliquées sur la surface de l'élément de substrat (1; 1a, 1b) qui est opposée à l'adhésif (9).

20. Procédé selon la revendication 19, les charges étant appliquées avant ou après l'application de l'adhésif (9).

21. Procédé selon l'une quelconque des revendications 9 à 12 et 14 à 20, au moins un élément de substrat (1 ; 1a, 1b) étant en rotation sur un plateau tournant (3), par rapport au peigne de charge (2).

22. Procédé selon l'une quelconque des revendications 5 à 21, la mise à la terre ou la charge de l'adhésif (9) étant effectuée sur sa buse de sortie.

23. Procédé selon l'une quelconque des revendications 1 à 22, les éléments de substrat (1 ; 1a, 1b) étant des moitiés d'un DVD.

24. Utilisation du procédé selon l'une quelconque des revendications 1 à 23, en reliant ensemble plus de deux éléments de substrat (1 ; 1a, 1b).
